# EUROPEAN PATENT APPLICATION

(11) **EP 2 479 461 A1**
(43) Date of publication of application: **25.07.2012**
(21) Application number: 11008230.2
(22) Date of filing: 12.10.2011
(51) Int. Cl.: F16J 15/10, F16J 15/12

(54) **Cast gasket**

(30) Priority: 20.01.2011 US 9926
(71) Applicant: Firma Carl Freudenberg, 69469 Weinheim (DE)
(72) Inventor: Bauer, Chad, D., Cleveland, Georgia 30528 (US); Belchuk, Mark, A., Windsor ON N8S 2K2 (US); Park, Edward, Hosung, Saline MI 48176 (US); Shah, Pratik, Farmington Hills MI 48335 (US)

(57) **Abstract**

A gasket is formed using a plurality of compression limiting inserts (12,14) each having first and second surfaces, and at least one edge (20) disposed between the first and second surfaces with an elastomeric sealing material (22) bonded thereto. Opposite ends (26A,26B) of each of the compression limiting inserts are aligned with, and spliced to, adjacent ones of the compression limiting inserts by the elastomeric sealing material. The plurality of compression limiting inserts are aligned to form a completed gasket.

## Description

### FIELD

The present disclosure relates to a cast gasket and more particularly to a cast gasket design that allows a gasket to be made in various shapes and sizes.

### BACKGROUND AND SUMMARY

This section provides background information related to the present disclosure which is not necessarily prior art.

Currently, large gaskets are very expensive to produce as the tooling and equipment is extremely expensive for each gasket design. For each alternative gasket design, different tooling and equipment may be required which further increases the manufacturing cost. By way of example, a gasket of one meter by one meter may cost up to one-hundred dollars per gasket when produced at a moderate volume using conventional tooling and presses. Accordingly, it is desirable to provide a gasket design that can be made in various sizes at significantly reduced costs per gasket. This section provides a general summary of the disclosure, and is not a comprehensive disclosure of its full scope or all of its features.

According to the principles of the present disclosure, a gasket is made up of a plurality of compression limiting inserts each having first and second surfaces, and at least one edge disposed between the first and second surfaces with an elastomeric sealing material bonded thereto. Opposité ends of each of the plurality of compression limiting inserts are aligned with and spliced to adjacent ones of the plurality of compression limiting inserts by the elastomeric sealing material. The plurality of compression limiting inserts are aligned to form a completed gasket.

The plurality of compression limiting inserts can include a plurality of corner segments, a plurality of straight segments, or other shapes that can be joined/spliced to form contiguous or completed gaskets of varying shapes and sizes. The compression limiting inserts can be made from thermoplastic, thermoplastic elastomers, thermoplastic vulcanizates, thermoset plastic, aluminum, steel, or other engineering materials.

Furthermore, the elastomeric sealing material can include a low viscosity material, such as silicone, polyurethane, or any other elastomeric material that can be introduced into the cavity, including EPDM, FKM, VMQ, NBR, HNBR, ECO, SBR, IR, ACM, natural rubber, and AEM.

The splicing of the compression limiting inserts can be performed in a splicing fixture wherein the inserts are inserted into a mold cavity fixture and the elastomeric sealing material is introduced at the joint therebetween so as to splice together the two compression limiting inserts from end to end. The spliced connections between compression limiting inserts can be flexible to allow the gasket to be folded into a smaller size for shipping and handling prior to installation. The elastomeric sealing material defining the spliced joints is strong enough and resilient enough to withstand the forces applied during the folding process. The ability to fold the gasket into smaller sizes greatly reduces the packaging and shipping costs associated with the gaskets. In addition, the ability to make the gasket from a plurality of compression limiting inserts without having specialized tooling for each size and shape of gasket, also greatly reduces the cost of the gasket. By way of example, a cast gasket, according to the principles of the present disclosure, can be made at approximately 15 to 20 percent of the cost of an equally sized and shaped gasket using conventional tooling and presses.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figure 1 is a perspective view of a cast gasket, according to the principles of the present disclosure;
Figure 2 is a perspective view of two straight gasket segments being placed into a fixture for splicing the segments together, according to the principles of the present disclosure;
Figure 3 shows the fixture of Figure 2 with the top fixture component in place so that the spliced connection can be formed therein, according to the principles of the present disclosure;
Figure 4 is a top plan view of the fixture and gasket segments as illustrated in Figure 3;
Figure 5 is a side plan view of the fixture and a pair of gasket segments, as illustrated in Figure 3;
Figure 6 is a cross-sectional view taken along line 6-6 of Figure 4;
Figure 7 is a cross-sectional view taken along line 7-7 of Figure 4;
Figure 8 is a cross-sectional view taken along line 8-8 of Figure 4;
Figure 9 is a perspective view, similar to Figure 2, showing gasket segments having optional nesting features on opposite ends thereof, according to the principles of the present disclosure;
Figure 10 shows a pair of gasket segments in a fixture similar to Figure 9, with alternative shaped nesting features, according to the principles of the present disclosure;
Figure 11 shows a dedicated tool for receiving a plurality of gasket segments to be spliced together within the tooling shown;
Figure 12 is a top plan view of the tooling shown in Figure 11 with a top applied thereto, according to the principles of the present disclosure;
Figure 13 is a cross-sectional view of the tooling shown in Figure 12; and
Figure 14 is a detailed cross-sectional view showing the cross-section of the cavity for receiving the gasket segments.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

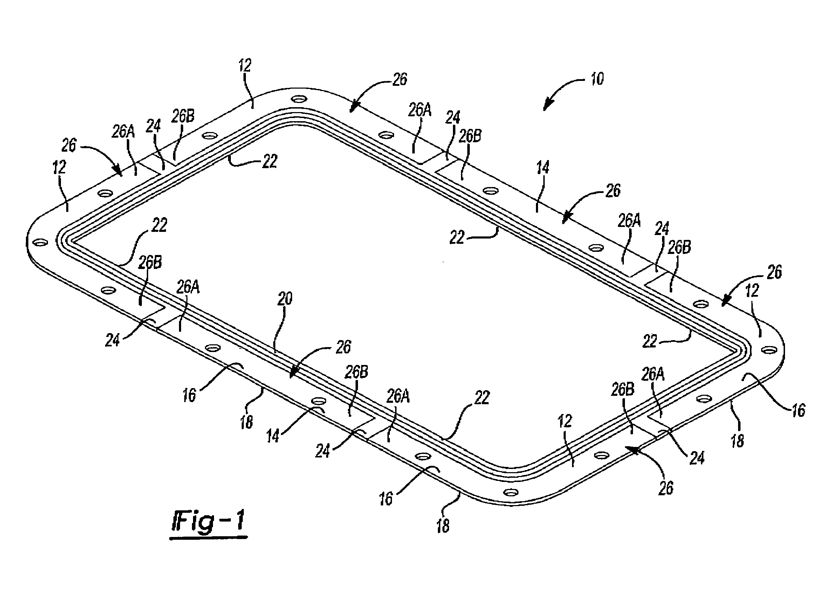

With reference to Figure 1, a cast gasket 10 is shown including a plurality of compression limiting inserts 12, 14 each having upper and lower surfaces 16, 18 and an interior edge 20 provided with an elastomeric sealing material 22 bonded thereto. Each of the compression limiting inserts 12, 14 with the elastomeric sealing material 22 bonded to the edge defines a gasket segment. Opposite ends 26A, 26B of each of the plurality of gasket segments 26 are each aligned with, and spliced to, adjacent ones of the plurality of gasket segments 26 by the elastomeric sealing material as illustrated at 24. The plurality of gasket segments 26 are aligned to form a completed gasket 10. The compression limiting inserts can have the shape of corners such as inserts 12, or can have a straight shape such as compression limiting inserts 14. As an alternative, different shaped compression limiting inserts can be utilized, such as curves, in order to form gaskets that can include various shapes and sizes.

According to the principles of the present disclosure, the compression limiting inserts 12, 14 can be formed from a variety of materials, such as thermoplastic, thermoplastic elastomers, thermoplastic vulcanizates, thermoset plastic, aluminum, and steel, as well as other known gasket compression limiting materials, including EPDM, FKM, VMQ, NBR, HNBR, ECO, SBR, IR, ACM, natural rubber, and AEM. Furthermore, the elastomeric sealing material can include silicone, urethane, or other known elastomeric materials. It is desirable to provide an elastomeric sealing material that has a low viscosity for facilitating the splicing process that is performed for connecting the gasket segments together.

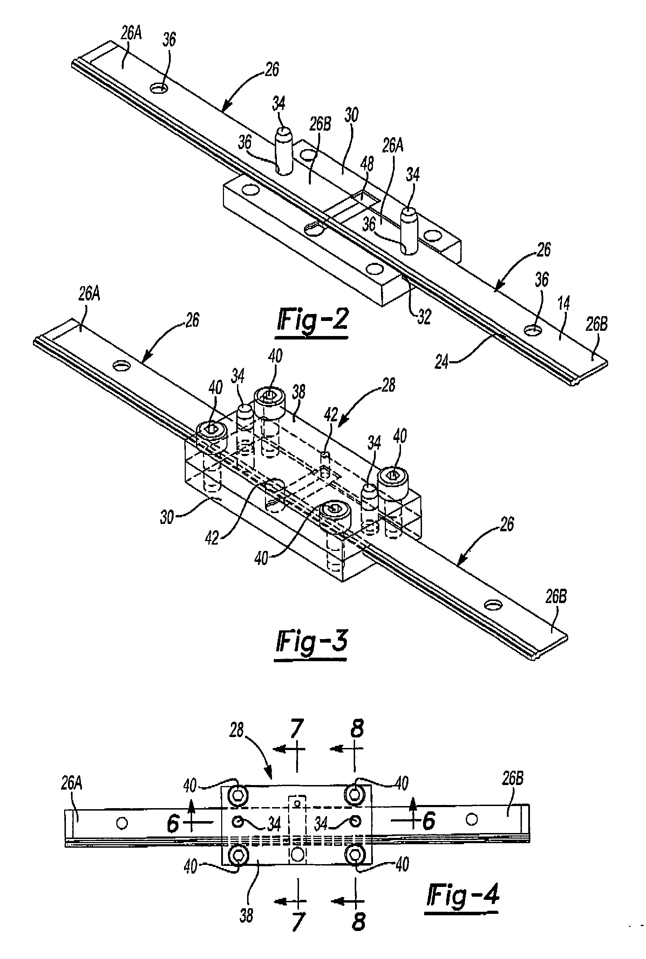

The gasket segments 26 generally include the compression limiting inserts 12, 14 with the elastomeric sealing material 22 bonded to the interior edge 20 thereof. It should be understood that the elastomeric sealing material 22 can be bonded to the interior edge, the exterior edge, or both, depending upon a desired application. Once the gasket segments 26 are formed, the gasket segments 26 can be spliced together to form a gasket 10 having a desired size and shape. The splicing operation can be performed in a fixture 28 such as will be illustrated and described with reference to Figures 2-8.

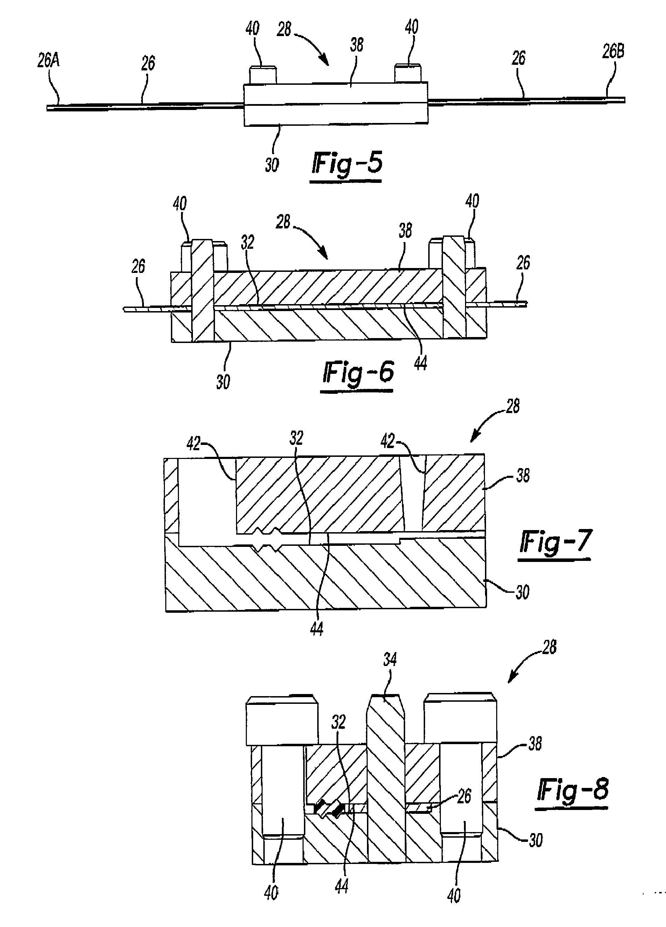

The fixture base 30 includes a recessed channel 32 generally having the contour of one side of the gasket segments, as best illustrated in Figures 7 and 8. As shown in Figure 2, a pair of dowel pins 34 can be provided for receipt in a corresponding aperture 36 provided in the gasket segments 26 for properly aligning and securing each of the gasket segments 26 within the fixture 28. Once the gasket segments are aligned within the base 30 of the fixture 28, the upper fixture member 38 is placed on top of the fixture base 30 in order to clamp the gasket segments 26 therein in proper spacing and alignment. The upper fixture member 38 can be affixed to the fixture base 30 by threaded fasteners 40 or other clamping or pressing means. The upper fixture member 38 can include a pair of introduction ports 42 to allow the elastomeric sealing material 24 to be injected into the cavity for splicing the gasket segments 26 together. The elastomeric sealing material 24 is allowed to cure within the fixture 28 prior to opening the fixture 28. It is noted that the upper fixture member 38 includes a lower face 44 that corresponds to the shape of the gasket segments 26 so that the cavity has the same shape as the gasket segment profile. Thus, the spliced gasket segments 26 come out of the fixture having a continuous elastomeric sealing bead 22 along the entire length thereof.

With the method of the present disclosure, the production of a gasket 10 having various shapes and sizes can be constructed by splicing together various gasket segments 26 having varying configurations including corner, straight, or curved configurations. In the exemplary embodiment shown in Figure 1, four corner segments 12, and two straight segments 14 are utilized for providing a generally rectangular-shaped gasket 10. It is anticipated that via the use of various sized and shaped gasket segments 26, large gaskets can be constructed without requiring special tooling. A plurality of fixtures can be used simultaneously for aligning, spacing, and splicing each of the connections between the gasket segments so that the assembly time can be significantly reduced. As shown in Figure 2, the fixture base 30 includes a recessed channel 48 that extends laterally from the splicing location so that the elastomeric material can be formed therein. In a post-molding operation, the excess elastomeric material can be removed. It is desirable that the elastomeric material have a sufficiently low viscosity to flow between the gasket segments 26.

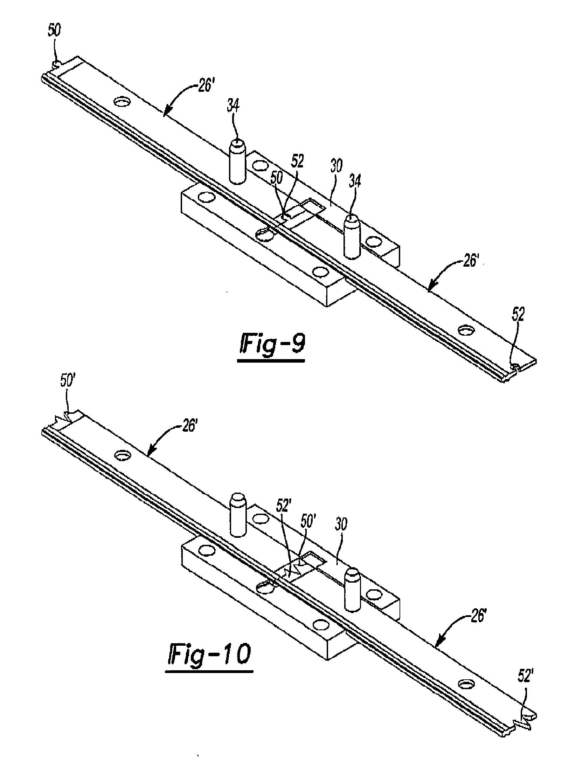

With reference to Figures 9 and 10, the gasket segments 26' are shown, including nesting features 50, 52 at opposite ends thereof. The nesting features 50, 52 can be in the form of a male nesting feature 50, and a female nesting feature 52 which is adapted to receive the male nesting feature 50. The nesting features 50, 52 enhance the gasket functional performance when exposed to exterior pressures, and may be desirable in certain applications. The nesting features 50, 52 are designed to provide a direct mechanical connection between the gasket segments, and can be in the form of rounded shapes, as illustrated in Figure 9, or can be in the form of other jagged configurations, as illustrated in Figure 10.

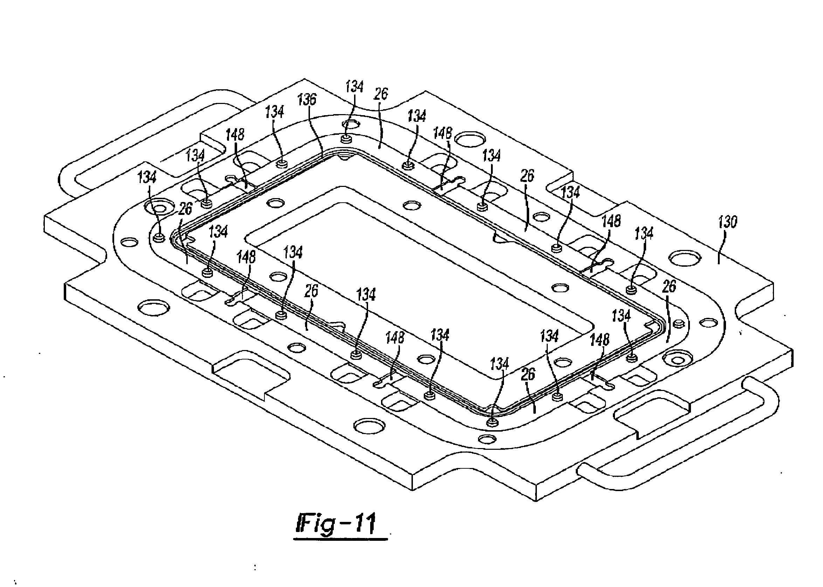

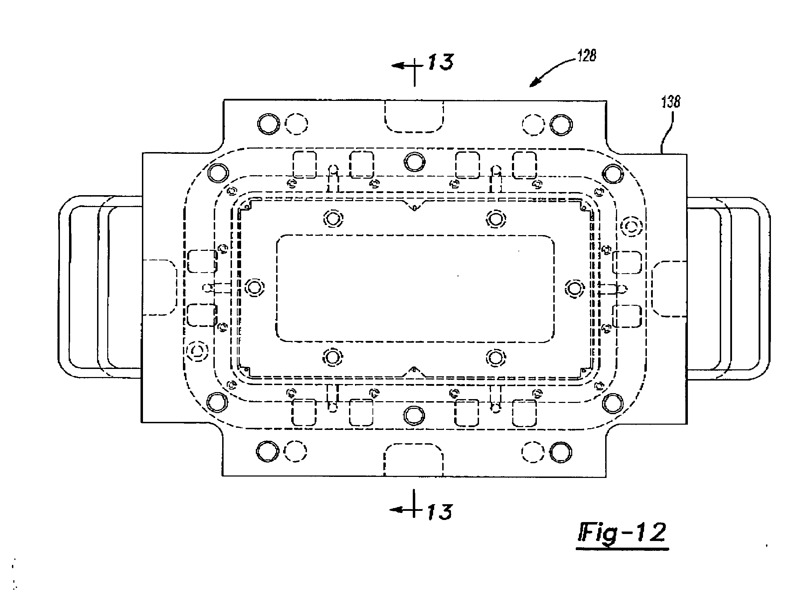

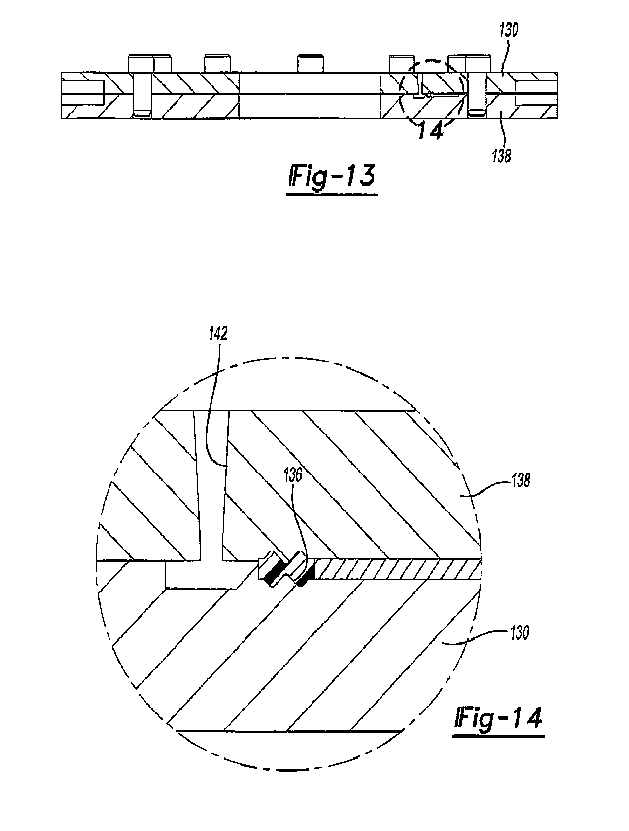

As illustrated in Figures 11-14, a dedicated fixture 128 can be utilized for mass producing gaskets having a single size and shape configure. In Figure 11, the fixture base 130 is configured for constructing a generally rectangular-shaped gasket therein. The fixture base 130 includes a plurality of spaced dowel pins 134 that are adapted to receive the gasket segments 26 thereon. A plurality of recessed grooves corresponding to the shape of elastomeric sealing material 22 are provided inboard of the dowel pins 134. The fixture base 130 includes a plurality of recessed grooves 148 similar to the recessed grooves 48, described above. The recessed grooves 148 are provided at the splicing region where each of the gasket segments 26 are spliced together. An upper fixture member 138 is shown in Figures 12-14 for mating with the fixture base 130 and defining the cavity therebetween having the profile of the finished gasket 10. As shown in Figure 14, the upper fixture 138 includes ports 142 for allowing elastomeric material to be injected at the splicing regions between gasket segments 26. The introduced elastomeric material splices the gasket segments 26 together to provide a connection between the gasket segments so that the gasket 10 has a desired configuration.

With the cast gasket 10, according to the principles of the present disclosure, the gasket 10 can be folded, as desired, at the spliced joints in order to reduce the size of the gasket 10 for shipping and handling. The reduced size of the gaskets in their folded configuration greatly reduces the cost of packaging and shipping thereof. The ability to manufacture the cast gaskets 10, according to the principles of the present disclosure, can greatly reduce the cost of tooling for making large sized gaskets. Furthermore, the ability to use standard gasket segments 26 having predetermined sizes and shapes in various gasket configurations, greatly reduces the cost of the components as well.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A gasket, comprising:
a plurality of compression limiting inserts each having first and second surfaces and at least one edge disposed between said first and second surfaces with an elastomeric sealing material bonded thereto, opposite ends of each of said plurality of compression limiting inserts being aligned with and spliced to adjacent ones of said plurality of compression limiting inserts by said elastomeric sealing material, wherein said plurality of compression limiting inserts are aligned to form a completed gasket.

2. The gasket according to claim 1, wherein said plurality of compression limiting inserts include a plurality of corner segments.

3. The gasket according to claim 2, wherein said plurality of compression limiting inserts include a plurality of straight segments.

4. The gasket according to claim 1, wherein said opposite ends of said plurality of compression limiting inserts include nesting features for engaging adjacent ones of said plurality of compression limiting inserts.

5. The gasket according to claim 4, wherein said plurality of compression limiting inserts include a plurality of corner segments.

6. The gasket according to claim 5, wherein said plurality of compression limiting inserts include a plurality of straight segments.

7. The gasket according to claim 1, wherein said plurality of compression limiting inserts include a plurality of straight segments.

8. The gasket according to claim 1, wherein said plurality of compression limiting inserts are made from one of thermoplastic, thermoplastic elastomers, and thermoplastic vulcanizates.

9. The gasket according to claim 1, wherein said plurality of compression limiting inserts are made from thermoset plastic.

10. The gasket according to claim 1, wherein said plurality of compression limiting inserts are made from aluminum.

11. The gasket according to claim 1, wherein said plurality of compression limiting inserts are made from steel.

12. The gasket according to claim 1, wherein said elastomeric sealing material includes one of silicone, polyurethane, EPDM, FKM, VMQ, NBR, HNBR, ECO, SBR, IR, ACM, natural rubber, and AEM.

13. The gasket according to claim 1, wherein said elastomeric sealing material includes polyurethane.

14. A method of making a gasket, comprising:
providing a plurality of compression limiting inserts each having first and
second surfaces and at least one edge disposed between said first and second surfaces;
forming an elastomeric sealing material on said at least one edge of each of said plurality of compression limiting inserts;
aligning opposite ends of each of said plurality of compression limiting inserts with an adjacent one of said plurality of compression limiting inserts in a mold cavity; and
splicing said opposite ends together by injecting said elastomeric sealing material into said mold cavity to form a spliced connection between adjacent compression limiting inserts, wherein said plurality of compression limiting inserts are aligned to form a completed gasket.

15. The method according to claim 14, wherein said plurality of compression limiting inserts are made from a material selected from the group of thermoplastic, thermoplastic elastomers, thermoplastic vulcanizates, thermoset plastic, aluminum and steel.

16. The method according to claim 14, wherein said elastomeric sealing material includes a material selected from silicone, polyurethane, EPDM, FKM, VMQ, NBR, HNBR, ECO, SBR, IR, ACM, natural rubber, and AEM.

17. The method according to claim 14, further comprising the step of forming a nesting feature on said opposite ends of said plurality of compression limiting inserts and said step of aligning opposite ends of each of said plurality of compression limiting inserts with an adjacent one of said plurality of compression limiting insert in a mold cavity includes engaging said nesting features to one another prior to said step of splicing said opposite ends together.

18. The method according to claim 14, wherein said plurality of compression limiting inserts include a plurality of corner segments.

19. The method according to claim 14, wherein said plurality of compression limiting inserts include a plurality of straight segments.

20. The method according to claim 14, further comprising folding said gasket at least one of said spliced connections for shipping.
